# EUROPEAN PATENT APPLICATION

(11) **EP 4 834 125 A1**
(43) Date of publication of application: **04.11.2026**
(21) Application number: 24912673.1
(22) Date of filing: 20.12.2024
(51) Int. Cl.: A23L 2/52, A23L 2/00, A23L 2/38, A23L 2/84

(54) **BEVERAGE, METHOD FOR PRODUCING SAME, AND METHOD FOR IMPROVING YOGURT FLAVOR OF BEVERAGE**

(30) Priority: 25.12.2023 JP 2023218603
(71) Applicant: Kirin Beverage Company, Limited, Tokyo 101-8645 (JP)
(72) Inventor: KINOSHITA, Akiko, Tokyo 101-8645 (JP); YOSHIZAWA, Makoto, Tokyo 101-8645 (JP); OKOCHI, Ran, Tokyo 101-8645 (JP)
(74) Representative: Hoffmann Eitle
(86) International application number: PCT/JP2024/045213
(87) International publication number: WO 2025/142784

(57) **Abstract**

A beverage contains dead bacteria of beneficial bacteria, a protein, and at least one among a linear ketone and a monoterpene. The beverage has an absorbance of 1.00 or less at a wavelength of 660 nm and has a dead bacteria concentration of the beneficial bacteria contained therein of 5 × 10⁸/L or more.

## Description

### TECHNICAL FIELD

The present disclosure relates to a beverage, a method of producing the same, and a method of improving yogurt flavor of a beverage.

### BACKGROUND

Among beverages, beverages having a yogurt flavor (hereinafter, referred to as "yogurt-flavored beverages") are commonly known as one type of soft beverage that has high palatability and that presents a distinctive taste like that of yogurt (hereinafter, also referred to as "yogurt character"). Examples of yogurt-flavored beverages include those referred to as milk-like soft beverages where a yogurt-like flavor is imparted to a soft beverage using fermented milk, which is obtained through fermentation of a milk raw material such as milk or milk powder with lactic acid bacteria or yeast, and a fragrance or flavoring ingredient such as a flavor.

Although it is generally known that a strong yogurt character can be achieved by blending fermented milk in a beverage, it has not been possible to avoid clouding of a beverage that arises when a milk raw material such as milk powder is included. Cloudiness can be avoided in a milk-like soft beverage by only blending a very small amount of a milk raw material or completely omitting a milk raw material, but this has meant that an adequate yogurt character cannot be achieved. In other words, there has been a trade-off relationship between yogurt character and transparency. Moreover, milk-like soft beverages are often consumed with the aim of quenching thirst, and soft beverages having high transparency such as carbonated beverages, sports drinks, and water-like beverages provided with a fruit flavor are known to typically be preferred by consumers.

Various attempts have been made to enhance the yogurt character of yogurt-flavored beverages, and particularly of milk-like soft beverages.

For example, Patent Literature (PTL) 1 proposes blending proline so as to bring about the flavor of fermented milk in a yogurt-flavored soft beverage. As another example, PTL 2 proposes a highly refreshing yogurt-like beverage having lactic acid and a phosphorus atom-containing compound blended in a specific blending ratio.

### CITATION LIST

### Patent Literature

PTL 1: JP 2017-93376 A
PTL 2: JP 2018-166455 A

### SUMMARY

### (Technical Problem)

However, there is still room for improvement of the conventional yogurt-flavored beverages described above in terms of simultaneously achieving low turbidity and imparting natural yogurt character. Accordingly, an object of the present disclosure is to provide a beverage having low turbidity and natural yogurt character.

### (Solution to Problem)

The inventors conducted diligent studies with the aim of solving the problems described above. The inventors made a new discovery that by blending dead bacteria of beneficial bacteria, a protein, and at least one among a linear ketone and a monoterpene, while also adjusting turbidity to not more than a certain level, it is possible to restrict turbidity of a beverage while also imparting natural yogurt character, and, in this manner, completed the present disclosure.

Specifically, with the aim of advantageously solving the problems described above, [1] a presently disclosed beverage comprises: dead bacteria of beneficial bacteria; a protein; and at least one among a linear ketone and a monoterpene, wherein a dead bacteria concentration of the beneficial bacteria is 5 × 10⁸/L or more, and the beverage has an absorbance of 1.00 or less at a wavelength of 660 nm. This beverage has low turbidity and natural yogurt character.

Note that the concentrations of a protein, a linear ketone, and a monoterpene contained in a beverage and the absorbance of a beverage at a wavelength of 660 nm can be measured by methods described in the EXAMPLES section.

[2] In the beverage according to the foregoing [1], the dead bacteria concentration of the beneficial bacteria is preferably 4,000 × 10⁸/L or less. When the dead bacteria concentration of the beneficial bacteria is 4,000 × 10⁸/L or less, the occurrence of an odor originating from the beneficial bacteria can be effectively suppressed.

[3] In the beverage according to the foregoing [1] or [2], the beneficial bacteria are preferably one type or two or more types selected from the group consisting of Lactobacillus bacteria and Lactococcus bacteria. When the beneficial bacteria contained in the beverage are one type or two or more types selected from the group consisting of Lactobacillus bacteria and Lactococcus bacteria, yogurt character can be further enhanced.

[4] In the beverage according to any one of the foregoing [1] to [3], the beneficial bacteria are preferably one type or two or more types selected from the group consisting of Lactobacillus rhamnosus CRL1505, Lactococcus lactis subsp. lactis JCM5805, and Lactobacillus paracasei KW3110. When the beneficial bacteria contained in the beverage are one type or two or more types selected from the group set forth above, yogurt character can be further enhanced.

[5] The beverage according to any one of the foregoing [1] to [4] preferably comprises both the linear ketone and the monoterpene. When the beverage contains both of the aforementioned compounds, the beverage has even better yogurt character.

[6] In the beverage according to any one of the foregoing [1] to [5], a concentration of the protein is preferably not less than 0.001 mass% and not more than 9.0 mass%. When the protein concentration in the beverage is within the range set forth above, the beverage has even better yogurt character.

[7] In the beverage according to any one of the foregoing [1] to [6], a concentration of the linear ketone is preferably not less than 0.001 ppm and not more than 50 ppm, and a concentration of the monoterpene is preferably not less than 0.05 ppm and not more than 1,000 ppm. When the beverage contains the aforementioned compounds in the concentration ranges set forth above, the beverage has even better yogurt character.

[8] The beverage according to any one of the foregoing [1] to [7] is preferably a packaged beverage. When the beverage is a packaged beverage, the beverage has excellent transportability and portability.

[9] Moreover, a presently disclosed method of producing a beverage is a method of producing a beverage that contains dead bacteria of beneficial bacteria, a protein, and at least one among a linear ketone and a monoterpene, the method comprising a step of, in blending of the protein, at least one among the linear ketone and the monoterpene, and the dead bacteria of the beneficial bacteria, blending the dead bacteria of the beneficial bacteria, the protein, and at least one among the linear ketone and the monoterpene such that a dead bacteria concentration of the beneficial bacteria is 5 × 10⁸/L or more and the beverage has an absorbance of 1.00 or less at a wavelength of 660 nm. Through this method of producing a beverage, it is possible to efficiently produce a beverage having low turbidity and excellent yogurt character.

[10] Furthermore, a presently disclosed method of improving yogurt flavor of a beverage is a method of improving yogurt flavor of a beverage that contains dead bacteria of beneficial bacteria, a protein, and at least one among a linear ketone and a monoterpene, the method comprising a step of, in blending of the protein, at least one among the linear ketone and the monoterpene, and the dead bacteria of the beneficial bacteria, blending the dead bacteria of the beneficial bacteria, the protein, and at least one among the linear ketone and the monoterpene such that a dead bacteria concentration of the beneficial bacteria is 5 × 10⁸/L or more and the beverage has an absorbance of 1.00 or less at a wavelength of 660 nm. Through this method of improving yogurt flavor, it is possible to restrict turbidity of a beverage while also effectively enhancing yogurt character.

### (Advantageous Effect)

According to the present disclosure, it is possible to provide a beverage having low turbidity and natural yogurt character.

### DETAILED DESCRIPTION

### (Beverage)

The presently disclosed beverage is a beverage that contains dead bacteria of beneficial bacteria, a protein, and at least one among a linear ketone and a monoterpene, wherein a dead bacteria concentration of the beneficial bacteria is 5 × 10⁸/L or more, and the beverage has an absorbance of 1.00 or less at a wavelength of 660 nm. Moreover, the presently disclosed beverage has low turbidity and natural yogurt character. Note that yogurt character in the beverage referred to in the present disclosure is a distinctive taste like yogurt that has a complexity providing an impression of fermentation and presents a refreshing drinking sensation.

In the present disclosure, dead bacteria of beneficial bacteria are used. No specific limitations are placed on the beneficial bacteria, and examples thereof include Oenococcus bacteria, Bifidobacterium bacteria, Weissella bacteria, Tetragenococcus bacteria, Lactococcus bacteria, Leuconostoc bacteria, Pediococcus bacteria, Streptococcus bacteria, Enterococcus bacteria, Lactobacillus bacteria, acetic acid bacteria, and Bacillus bacteria.

Note that the term "Lactobacillus bacteria" as used in the present disclosure encompasses bacteria that were classified as Lactobacillus prior to the Lactobacillus reclassification. For example, "Lactobacillus bacteria" encompasses bacteria that, in accompaniment to the Lactobacillus reclassification, were newly classified as Acetilactobacillus, Agrilactobacillus, Amylolactobacillus, Apilactobacillus, Bombilactobacillus, Companilactobacillus, Dellaglioa, Fructilactobacillus, Furfurilactobacillus, Holzapfelia, Lacticaseibacillus, Lactiplantibacillus, Lapidilactobacillus, Latilactobacillus, Lentilactobacillus, Levilactobacillus, Ligilactobacillus, Limosilactobacillus, Liquorilactobacillus, Loigolactobacillus, Paralactobacillus, Paucilactobacillus, Schleiferilactobacillus, Secundilactobacillus, and so forth.

Of the examples given above, Oenococcus bacteria, Bifidobacterium bacteria, Lentilactobacillus bacteria, Weissella bacteria, Tetragenococcus bacteria, Lactococcus bacteria, Leuconostoc bacteria, Pediococcus bacteria, Enterococcus bacteria, Lactobacillus bacteria, and Lactiplantibacillus bacteria are preferable as the beneficial bacteria. Moreover, from a viewpoint of imparting natural yogurt character, it is more preferable that one type or two or more types selected from the group consisting of Lactobacillus bacteria and Lactococcus bacteria are included as the beneficial bacteria.

The Oenococcus bacteria mentioned above may be Oenococcus oeni or the like, for example. Specific examples of Oenococcus bacteria include Oenococcus oeni JCM6125.

The Bifidobacterium bacteria mentioned above may be Bifidobacterium animalis subsp. lactis, Bifidobacterium longum subsp. infantis, or the like, for example. Specific examples of Bifidobacterium bacteria include Bifidobacterium animalis subsp. lactis JCM10602 and Bifidobacterium longum subsp. infantis JCM1222.

The Weissella bacteria mentioned above may be Weissella paramesenteroides, Weissella viridescens, or the like, for example. Specific examples of Weissella bacteria include Weissella paramesenteroides JCM9890 and Weissella viridescens JCM1174.

The Tetragenococcus bacteria mentioned above may be Tetragenococcus halophilus or the like, for example. Specific examples of Tetragenococcus bacteria include Tetragenococcus halophilus NRIC0098.

The Lactococcus bacteria mentioned above may be Lactococcus lactis, Lactococcus lactis subsp. lactis, Lactococcus garvieae, Lactococcus lactis subsp. cremoris, Lactococcus lactis subsp. hordniae, Lactococcus plantarum, or the like, for example.

Specific examples of Lactococcus bacteria include Lactococcus lactis subsp. lactis JCM5805, Lactococcus lactis subsp. lactis NBRC12007, Lactococcus lactis subsp. lactis NRIC1150, Lactococcus lactis subsp. lactis JCM20101, Lactococcus lactis subsp. lactis JCM7638, Lactococcus lactis subsp. lactis ATCC11454, Lactococcus garvieae NBRC100934, Lactococcus lactis subsp. cremoris JCM16167, Lactococcus lactis subsp. cremoris NBRC100676, Lactococcus lactis subsp. hordniae JCM1180, Lactococcus lactis subsp. hordniae JCM11040, and Lactococcus plantarum JCM11056.

The Leuconostoc bacteria mentioned above may be Leuconostoc carnosum, Leuconostoc lactis, or the like, for example. Specific examples of Leuconostoc bacteria include Leuconostoc carnosum JCM9695 and Leuconostoc lactis NBRC12455.

The Pediococcus bacteria mentioned above may be Pediococcus acidilactici, Pediococcus pentosaceus, Pediococcus cellicola, Pediococcus claussenii, Pediococcus damnosus, Pediococcus ethanolidurans, Pediococcus inopinatus, Pediococcus parvulus, Pediococcus stilesii, or the like, for example. Specific examples of Pediococcus bacteria include Pediococcus acidilactici JCM8797, Pediococcus acidilactici K15, and Pediococcus damnosus JCM5886.

The Streptococcus bacteria mentioned above may be Streptococcus thermophilus or the like, for example. Specific examples of Streptococcus bacteria include Streptococcus thermophilus SBC8781.

The Enterococcus bacteria mentioned above may be Enterococcus alcedinis or the like, for example.

The Lactobacillus bacteria mentioned above may be Lactobacillus paracasei, Lactobacillus delbrueckii, Lactobacillus acidophilus, Lactobacillus casei, Lactobacillus fructivorans, Lactobacillus hilgardii, Lactobacillus rhamnosus, Lactobacillus gasseri, Lactobacillus acidophilus, Lactobacillus bulgaricus, Lactobacillus parakefiri, Lactobacillus plantarum, or Lactobacillus pentosus, for example.

Specific examples of Lactobacillus bacteria include Lactobacillus paracasei KW3110, Lactobacillus paracasei MCC1849, Lactobacillus paracasei K71, Lactobacillus rhamnosus GG, Lactobacillus rhamnosus CRL1505, Lactobacillus gasseri SBT2055, Lactobacillus acidophilus L-92, Lactobacillus bulgaricus OLL1073R-1, Lactobacillus parakefiri (Lentilactobacillus parakefiri in new classification) JCM8573, Lactobacillus plantarum (Lactiplantibacillus plantarum in new classification) L-137, and Lactobacillus pentosus (Lactiplantibacillus pentosus in new classification) ONRICb0240.

The acetic acid bacteria mentioned above may be Gluconacetobacter bacteria, Acetobacter bacteria, Gluconobacter bacteria, or the like, for example, without any specific limitations, are preferably Gluconacetobacter bacteria, are more preferably Gluconacetobacter hansenii, and are even more preferably Gluconacetobacter hansenii GK-1.

The Bacillus bacteria mentioned above may be Bacillus coagulans or the like, for example, without any specific limitations. Specific examples of Bacillus bacteria include Bacillus coagulans SANK70258 strain.

Of the examples given above, the inclusion of one type or two or more types selected from the group consisting of Lactobacillus rhamnosus CRL1505, Lactococcus lactis subsp. lactis JCM5805, and Lactobacillus paracasei KW3110 as the beneficial bacteria is preferable from a viewpoint of imparting natural yogurt character.

In the present disclosure, the dead bacteria of the beneficial bacteria may be a dry material or may be a non-dry material without any specific limitations, though a dry material is preferable from a viewpoint of storage stability of the dead beneficial bacteria. In particular, a dry powder of dead beneficial bacteria is preferable as the dead bacteria of the beneficial bacteria.

No specific limitations are placed on the method by which the dead bacteria of the beneficial bacteria are prepared. For example, a method in which a culture medium where beneficial bacteria have been cultured is sterilized and then filtration and centrifugal separation, or the like, are performed to collect bacterial cells or a method in which bacterial cells are collected by filtration and centrifugal separation, or the like, from a culture medium where beneficial bacteria have been cultured and are then sterilized can be adopted. Note that among beneficial bacteria, particularly lactic acid bacteria, for example, can be cultured using a lactic acid bacteria culture medium that is commonly known to those skilled in the art such as MRS (de Man-Rogosa-Sharpe) culture medium, which contains glucose, hydrolyzed protein, and yeast extract. In general, culturing can be performed under anaerobic conditions with a culture temperature of 30°C to 37°C and a culture period of 2 days to 3 days.

In addition, the bacterial cells that have been collected after culturing can be further subjected to drying and pulverization as necessary. Note that no specific limitations are placed on the means of sterilization, and common means of killing bacteria such as not only heating, but also UV irradiation, γ-ray irradiation, and so forth can be adopted.

The concentration of the dead beneficial bacteria contained in the beverage is required to be 5 × 10⁸/L or more, is preferably 9 × 10⁸/L or more, and more preferably 17 × 10⁸/L or more, and is more preferably 4,000 × 10⁸/L or less, more preferably 3,000 × 10⁸/L or less, even more preferably 2,000 × 10⁸/L or less, further preferably 1,200 × 10⁸/L or less, and particularly preferably 750 × 10⁸/L or less.

When the concentration of the dead beneficial bacteria is not less than any of the lower limits set forth above, natural yogurt character can be imparted to the beverage. Moreover, when the concentration of the dead beneficial bacteria is not more than any of the upper limits set forth above, increased turbidity of the beverage can be restricted, and a distinctive odor originating from the dead beneficial bacteria can also be suppressed. Note that the "odor originating from beneficial bacteria" referred to in the present specification refers to an odor such as a culture medium odor or characteristic odor originating from the addition of beneficial bacteria.

The concentration of the dead beneficial bacteria contained in the beverage can be controlled through adjustment of the additive amount of the dead beneficial bacteria that is blended in the beverage.

Furthermore, the concentration of the dead beneficial bacteria contained in the beverage can be measured by a commonly known bacterial count measurement method for beneficial bacteria without any specific limitations, and examples thereof include direct microscopy, the electric sensing zone method, the PCR method, and flow cytometry, with flow cytometry being preferable.

### <Protein>

The protein that is contained in the presently disclosed beverage may be a milk protein. Examples of the milk protein include milk proteins, whey proteins (for example, concentrated whey, whey powder, and protein concentrated whey powder defined in the Ordinance on Milk, etc.), and casein. Milk proteins mentioned here are also referred to as total milk protein and are a product that is obtained by concentrating proteins contained in cow milk by an ultra-filtration technique or the like and then drying the concentrate and that includes both casein and whey proteins. Note that the milk protein is an ingredient that can originate from any of the "milk raw materials" that are listed in the following "Milk ingredient" section. In particular, the protein that is contained in the presently disclosed beverage is preferably a milk protein, and is more preferably whey proteins.

The concentration of the protein contained in the presently disclosed beverage is preferably 0.001 mass% or more, more preferably 0.01 mass% or more, and even more preferably 0.04 mass% or more, and is preferably 9.0 mass% or less, more preferably 5.0 mass% or less, even more preferably 0.5 mass% or less, and further preferably 0.2 mass% or less.

When the protein concentration is not less than any of the lower limits set forth above, natural yogurt character can be imparted to the beverage. Moreover, when the protein concentration is not more than any of the upper limits set forth above, increased turbidity of the beverage can be restricted.

Although no specific limitations are placed on the origin of the protein, in a case in which the protein is a milk protein, the amount of the milk protein can be adjusted through adjustment of the used amount of a milk raw material, for example.

The concentration of the protein contained in the beverage can be measured based on the Kjeldahl method, for example.

### <<Milk ingredient>>

A milk ingredient that can be contained in the presently disclosed beverage is milk solids content originating from a milk raw material, and specific examples thereof include a milk protein, milk fat content, lactose, and so forth.

### [Milk raw material]

The milk raw material that can be used in the presently disclosed beverage may be milk or a milk product. More specifically, the milk raw material may, for example, be one or a plurality of milk raw materials selected from the group consisting of raw milk, cow milk, special milk, goat milk, sheep milk, buffalo milk, composition modified milk, low fat milk, fat-free milk, processed milk, milk beverages, cream, butter, butter oil, milk proteins, whey proteins (for example, concentrated whey, whey powder, and protein concentrated whey powder defined in the Ordinance on Milk, etc.), casein, fermented whey, concentrated milk, concentrated skimmed milk, evaporated milk, evaporated skimmed milk, sweetened condensed milk, sweetened condensed skimmed milk, whole milk powder, skimmed milk powder, cream powder, butter milk powder, sweetened milk powder, formulated milk powder, formulated liquid milk, fermented milk, and lactic acid bacteria beverages.

### <Linear ketone and monoterpene>

The presently disclosed beverage contains at least one among a linear ketone and a monoterpene. Moreover, the presently disclosed beverage may contain both a linear ketone and a monoterpene.

The linear ketone contained in the presently disclosed beverage is preferably a linear ketone having a carbon number of 5 to 18, examples of which include 2-nonanone, 2-heptanone, and 2-undecanone. In particular, 2-nonanone is more preferable. The monoterpene contained in the presently disclosed beverage may be limonene, myrcene, m-cymene, 2-carene, 3-carene, nerol, perillaldehyde, γ-terpinene, α-pinene, or β-pinene, for example, of which, limonene is preferable. Of these examples, the beverage preferably contains at least one among 2-nonanone and limonene, and may contain both 2-nonanone and limonene.

The concentration of the linear ketone contained in the presently disclosed beverage is preferably 0.001 ppm or more, more preferably 0.01 ppm or more, and even more preferably 0.02 ppm or more, and is preferably 50 ppm or less, more preferably 40 ppm, or less, even more preferably 30 ppm or less, and particularly preferably 20 ppm or less. Moreover, the concentration of the monoterpene contained in the presently disclosed beverage is preferably 0.05 ppm or more, more preferably 0.1 ppm or more, and even more preferably 0.5 ppm or more, and is preferably 1,000 ppm or less, more preferably 900 ppm or less, even more preferably 800 ppm or less, further preferably 700 ppm or less, particularly preferably 600 ppm or less, more particularly preferably 500 ppm or less, and even more particularly preferably 300 ppm or less.

The concentrations of the linear ketone and the monoterpene can be measured by a commonly known method using gas chromatography/mass spectrometry (GC/MS).

In a case in which the presently disclosed beverage contains both a linear ketone and a monoterpene, a ratio of the concentration of the monoterpene relative to the concentration of the linear ketone contained in the presently disclosed beverage is preferably 0.001 or more, preferably 0.01 or more, more preferably 0.1 or more, and even more preferably 1 or more, and is preferably 1,000,000 or less, more preferably 100,000 or less, even more preferably 10,000 or less, further preferably 1,000 or less, and particularly preferably 100 or less. When the relative concentration ratio in a case in which both a linear ketone and a monoterpene are included is within any of the ranges set forth above, even better yogurt flavor can be efficiently imparted.

### <Other ingredients>

The presently disclosed beverage may contain one type or two or more types of additives selected from the group consisting of acidulants, fragrances and flavorings, colorings, sweeteners, preservatives, thickeners, stabilizers, emulsifiers, dietary fiber, bittering agents, antioxidants, pH modifiers, vitamins, nutritional fortifiers, umami ingredients, dietary fiber, extracts, solvents, minerals, water-soluble functional ingredients, and lipid-soluble functional ingredients within a range not interfering with the effects according to the present disclosure. No specific limitations are placed on the additives described above, and typically used examples thereof can be adopted. Specifically, acesulfame K, stevia, and sucralose can be adopted as sweeteners, citric acid can be adopted as an acidulant, soybean polysaccharide and pectin can be adopted as stabilizers, and sodium, potassium, magnesium, and calcium can be adopted as minerals, for example.

### <Physical properties>

### <<Absorbance>>

The absorbance of the presently disclosed beverage at a wavelength of 660 nm is required to be 1.00 or less, and is preferably 0.90 or less, preferably 0.80 or less, preferably 0.70 or less, preferably 0.60 or less, preferably 0.50 or less, preferably 0.40 or less, preferably 0.30 or less, preferably 0.20 or less, and even more preferably 0.10 or less. The lower limit for the absorbance of the presently disclosed beverage is not specifically limited and may be 0.02 or more.

The absorbance of the beverage can be controlled by adjusting the additive amounts of the dead beneficial bacteria, the protein, and so forth.

The absorbance of the beverage can be measured by a method in which a commonly known spectrophotometer is used to perform measurement at an appropriate wavelength (660 nm).

### (Method of producing beverage)

The presently disclosed method of producing a beverage is a method of producing a beverage that contains dead bacteria of beneficial bacteria, a protein, and at least one among a linear ketone and a monoterpene. No specific limitations are placed on the presently disclosed production method so long as it includes a step of, in blending of a protein, at least one among a linear ketone and a monoterpene, and dead bacteria of beneficial bacteria, adjusting a dead bacteria concentration of the beneficial bacteria in the beverage to 5 × 10⁸/L or more and absorbance of the beverage at a wavelength of 660 nm to 1.00 or less. In other words, production can be performed according to a conventional method of producing a beverage that is commonly known so long as the step described above is included.

The step of blending a protein, at least one among a linear ketone and a monoterpene, and dead bacteria of beneficial bacteria may, for example, be a step of adding a protein, at least one among a linear ketone and a monoterpene, an optional solvent such as water, and other optional ingredients into a mixing tank and adding dead bacteria of beneficial bacteria thereto in a proportion of 5 × 10⁸/L or more. Alternatively, the aforementioned step may be a step of simultaneously adding dead bacteria of beneficial bacteria, a protein, at least one among a linear ketone and a monoterpene, and an optional solvent into a mixing tank. The format of addition, order of blending, and so forth are of course not limited to configurations described above.

Although it may be the case that the presently disclosed beverage is not a packaged beverage, the presently disclosed beverage is preferably a packaged beverage. A container of the packaged beverage may be a container formed of a plastic material (resin bottle) such as a PET bottle, a polypropylene bottle, or a polyvinyl chloride bottle, a glass bottle container, a paper carton container, a can container, or the like. The volume of the container is not specifically limited but may be 65 mL or more, and preferably 100 mL or more, for example, and may be 2,000 mL or less, and preferably 500 mL or less, for example.

The packaged beverage can be produced by loading a beverage that has been obtained according to the presently disclosed production method set forth above into a container such as any of those listed above and then sealing the container according to a known method.

Although the presently disclosed beverage may not have been subjected to heat sterilization, the presently disclosed beverage may be subjected to heat sterilization from a viewpoint of improving preservability. The method and conditions of the heat sterilization can be a method and conditions that are typically used for a beverage such as a packaged beverage, but retort sterilization, UHT (Ultra High Temperature) sterilization, HTST (High Temperature Short Time) sterilization, or pasteurizer sterilization is preferable.

### (Method of improving yogurt flavor)

The presently disclosed method of improving yogurt flavor of a beverage is a method of improving yogurt flavor of a beverage that contains dead bacteria of beneficial bacteria, a protein, and at least one among a linear ketone and a monoterpene. No specific limitations are placed on this method of improving yogurt flavor so long as it includes a step of, in blending of a protein, at least one among a linear ketone and a monoterpene, and dead bacteria of beneficial bacteria, blending the dead bacteria of the beneficial bacteria, the protein, and at least one among the linear ketone and the monoterpene such that a dead bacteria concentration of the beneficial bacteria is 5 × 10⁸/L or more and the beverage has an absorbance of 1.00 or less at a wavelength of 660 nm.

The step of blending a protein, at least one among a linear ketone and a monoterpene, and dead bacteria of beneficial bacteria can be any of the same steps as for the step described in relation to the presently disclosed method of producing a beverage.

### EXAMPLES

The following provides a more specific description of the present disclosure based on examples. However, the present disclosure is not limited to these examples. In each of the test groups described below, various measurements and evaluations were performed by the following methods.

### (Physical property measurement)

### <2-Nonanone and limonene concentration measurement method>

The concentrations of 2-nonanone and limonene in each test group were measured by GC/MS by extracting headspace aroma components of a solution of each test group using an SPME fiber and analyzing the extract.

### <Absorbance measurement method>

The absorbance of each test group was measured at a measurement wavelength of 660 nm using a Shimadzu UV-Vis Spectrophotometer UV-1280 after the sample had been adjusted to 20°C in advance.

### (Test 1) Influence of dead beneficial bacteria, protein, 2-nonanone, and limonene on absorbance and yogurt character of beverage

The following test was conducted in order to investigate the influence of each of dead beneficial bacteria, protein, 2-nonanone, and limonene on absorbance and yogurt character of a beverage.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration.

Whey proteins (Meiji Co., Ltd.), 2-nonanone, limonene, and the rhamnosus dead bacteria aqueous solution were added to water such as to give the protein concentrations, 2-nonanone concentrations, limonene concentrations, and rhamnosus dead bacteria concentrations indicated in Table 1-1 and Table 1-2, and citric acid was added such as to give a pH of approximately 4 and thereby prepare test groups 1 to 31.

### <Measurement and sensory evaluation>

The absorbance of beverages obtained in test groups 1 to 31 was measured by the previously described method.

For beverages obtained in the test groups that had been prepared at approximately 20°C, five trained panelists having sensory discrimination ability evaluated yogurt character of the beverage obtained in each test group based on the following standard. An average value of the evaluation scores of the five panelists was calculated. Note that the standard error of the average value for all panelists was 0.2 or less. The results are shown in Table 1-1 and Table 1-2.

Note that in this evaluation, a beverage of test group 1 (whey proteins, 2-nonanone, limonene, and rhamnosus dead bacteria not added) and a beverage of test group 31 (protein concentration of 0.05 mass%, 2-nonanone concentration of 0.1 ppm, limonene concentration of 50 ppm, and rhamnosus dead bacteria concentration of 20 × 10⁸/L) were respectively fixed as 1 point and 4 points, the interval from 1 point to 4 points was equally divided to set a standard per "1 point" of evaluation score, and an evaluation of 1 point to 5 points (a larger score is preferable) was made based on this standard.

### (Test 2) Influence of concentration of dead beneficial bacteria on absorbance, yogurt character, and odor originating from beneficial bacteria of beverage

The following test was conducted in order to investigate the influence of the concentration of dead beneficial bacteria on the absorbance, yogurt character, and odor originating from beneficial bacteria of a beverage.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration.

Whey proteins, 2-nonanone or limonene, and the rhamnosus dead bacteria aqueous solution were added to water such as to give a protein concentration of 0.05 mass%, a 2-nonanone concentration of 0.1 ppm or limonene concentration of 50 ppm, and rhamnosus dead bacteria concentrations indicated in Table 2-1 and Table 2-2, and citric acid was added such as to give a pH of approximately 4 and thereby prepare test groups 6, 7, 16, 27, and 32 to 45.

### <Measurement and sensory evaluation>

For beverages obtained in test groups 6, 7, 16, 27, and 32 to 45, the absorbance was measured by the previously described method. Moreover, a sensory evaluation of the yogurt character of the beverage obtained in each test group was made in accordance with the same evaluation standard as in test 1 and with the same definitions.

In addition, for beverages obtained in the test groups that had been prepared at approximately 20°C, five trained panelists having sensory discrimination ability evaluated odor originating from beneficial bacteria of the beverage obtained in each test group based on the following evaluation standard. An average value of the evaluation scores of the five panelists was calculated. Note that the standard error of the average value for all panelists was 0.2 or less. The results are shown in Table 2-1 and Table 2-2.

Note that in this evaluation, a beverage of test group 6 (protein concentration of 0.05 mass%, 2-nonanone concentration of 0.1 ppm, and rhamnosus dead bacteria not added) and a beverage of test group 37 (protein concentration of 0.05 mass%, 2-nonanone concentration of 0.1 ppm, and rhamnosus dead bacteria concentration of 1,000 × 10⁸/L) were respectively fixed as 1 point and 4 points, the interval from 1 point to 4 points was equally divided to set a standard per "1 point" of evaluation score, and an evaluation of 1 point to 5 points (a smaller score is preferable) was made based on this standard.

### (Test 3) Influence of protein concentration on absorbance, yogurt character, and odor originating from beneficial bacteria of beverage

The following test was conducted in order to investigate the influence of protein concentration on the absorbance, yogurt character, and odor originating from beneficial bacteria of a beverage.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 30 minutes of sterilization at 80°C to prepare a rhamnosus dead bacteria aqueous solution of 100 × 10⁸/g in concentration.

Whey proteins, 2-nonanone or limonene, and the rhamnosus dead bacteria aqueous solution were added to water such as to give protein concentrations indicated in Table 3-1 and Table 3-2, a 2-nonanone concentration of 0.1 ppm or limonene concentration of 50 ppm, and a rhamnosus dead bacteria concentration of 20 × 10⁸/L, and citric acid was added such as to give a pH of approximately 4 and thereby prepare test groups 10, 11, 16, 27, and 46 to 55.

### <Measurement and sensory evaluation>

For test groups 10, 11, 16, 27, and 46 to 55, the absorbance was measured by the previously described method. Moreover, a sensory evaluation of the beverage obtained in each test group was made in accordance with the same evaluation standard as in test 2 and with the same definitions. The results are shown in Table 3-1 and Table 3-2.

**[Table 1-1]**

| | Units | Test group 1 | Test group 2 | Test group 3 | Test group 4 | Test group 5 | Test group 6 | Test group 7 | Test group 8 | Test group 9 | Test group 10 | Test group 11 |
|---|---|---|---|---|---|---|---|---|---|---|---|---|
| Protein concentration | Mass% | 0 | 0.05 | 0 | 0 | 0 | 0.05 | 0.05 | 0.05 | 0 | 0 | 0 |
| 2-Nonanone concentration | ppm | 0 | 0 | 0.1 | 0 | 0 | 0.1 | 0 | 0 | 0.1 | 0.1 | 0 |
| Limonene concentration | ppm | 0 | 0 | 0 | 50 | 0 | 0 | 50 | 0 | 50 | 0 | 50 |
| Rhamnosus dead bacteria concentration | ×10⁸/L | 0 | 0 | 0 | 0 | 20 | 0 | 0 | 20 | | 20 | 20 |
| Absorbance at wavelength of 660 nm | - | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 |
| Yogurt character | - | 1 | 1.1 | 1.1 | 1.2 | 1.1 | 1.3 | 1.3 | 1.3 | 1.3 | 1.3 | 1.3 |

**[Table 1-2]**

| | Units | Test group 12 | Test group 13 | Test group 14 | Test group 15 | Test group 16 | Test group 17 | Test group 18 | Test group 19 | Test group 20 | Test group 21 | Test group 22 | Test group 23 | Test group 24 | Test group 25 | Test group 26 | Test group 27 | Test group 28 | Test group 29 | Test group 30 | Test group 31 |
|---|---|---|---|---|---|---|---|---|---|---|---|---|---|---|---|---|---|---|---|---|---|
| Protein concentration | Mass% | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| 2-Nonanone concentration | ppm | 0.0005 | 0.001 | 0.01 | 0.05 | 0.1 | 0.5 | 1 | 5 | 10 | 50 | 0 | 0 | 0 | 0 | 0 | 0 | 0 | 0 | 0 | 0.1 |
| Limonene concentration | ppm | 0 | 0 | 0 | 0 | 0 | 0 | 0 | 0 | 0 | 0 | 0.01 | 0.05 | 0.1 | 1 | 10 | 50 | 200 | 400 | 1000 | 50 |
| Rhamnosus dead bacteria concentration | ×10⁸/L | 20 | 20 | 20 | 20 | 20 | 20 | 20 | 20 | 20 | 20 | 20 | 20 | 20 | 20 | 20 | 20 | 20 | 20 | 20 | 20 |
| Absorbance at wavelength of 660 nm | - | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 | ≤ 0.02 |
| Yogurt character | - | 1.5 | 3 | 3.1 | 3.3 | 3.9 | 3.8 | 3.5 | 3.3 | 2.1 | 2 | 1.5 | 3.1 | 3.3 | 3.8 | 3.9 | 3.9 | 3.9 | 2.8 | 2.5 | 4 |

**[Table 2-1]**

| | Units | Test group 6 | Test group 32 | Test group 33 | Test group 16 | Test group 34 | Test group 35 | Test group 36 | Test group 37 | Test group 38 |
|---|---|---|---|---|---|---|---|---|---|---|
| Protein concentration | Mass% | 0.05 | 0.05 | 0.05 | 0.05 | 0.05 | 0.05 | 0.05 | 0.05 | 0.05 |
| 2-Nonanone concentration | ppm | 0.1 | 0.1 | 0.1 | 0.1 | 0.1 | 0.1 | 0.1 | 0.1 | 0.1 |
| Rhamnosus dead bacteria concentration | ×10⁸/L | 0 | 5 | 10 | 20 | 50 | 100 | 500 | 1000 | 1500 |
| Absorbance at wavelength of 660 nm | - | ≤ 0.02 | ≤ 0.02 | ≤ 0.02 | ≤ 0.02 | ≤ 0.02 | 0.04 | 0.2 | 0.5 | 0.8 |
| Yogurt character | - | 1.3 | 2.6 | 3.2 | 3.9 | 4 | 4.2 | 4 | 3.8 | 3.4 |
| Odor originating from beneficial bacteria | - | 1 | 1 | 1 | 1 | 1.3 | 1.7 | 3.5 | 4 | 4.5 |

**[Table 2-2]**

| | Units | Test group 7 | Test group 39 | Test group 40 | Test group 27 | Test group 41 | Test group 42 | Test group 43 | Test group 44 | Test group 45 |
|---|---|---|---|---|---|---|---|---|---|---|
| Protein concentration | Mass% | 0.05 | 0.05 | 0.05 | 0.05 | 0.05 | 0.05 | 0.05 | 0.05 | 0.05 |
| Limonene concentration | ppm | 50 | 50 | 50 | 50 | 50 | 50 | 50 | 50 | 50 |
| Rhamnosus dead bacteria concentration | ×10⁸/L | 0 | 5 | 10 | 20 | 50 | 100 | 500 | 1000 | 1500 |
| Absorbance at wavelength of 660 nm | - | ≤ 0.02 | ≤ 0.02 | ≤ 0.02 | ≤ 0.02 | ≤ 0.02 | 0.04 | 0.2 | 0.5 | 0.8 |
| Yogurt character | - | 1.3 | 2.6 | 3.4 | 3.9 | 4.1 | 4.1 | 4 | 3.9 | 3.4 |
| Odor originating from beneficial bacteria | - | 1 | 1 | 1 | 1 | 1.2 | 1.7 | 2.9 | 3.4 | 4 |

**[Table 3-1]**

| | Units | Test group 10 | Test group 46 | Test group 47 | Test group 16 | Test group 48 | Test group 49 | Test group 50 |
|---|---|---|---|---|---|---|---|---|
| Protein concentration | Mass% | 0 | 0.001 | 0.01 | 0.05 | 0.1 | 0.5 | 10 |
| 2-Nonanone concentration | ppm | 0.1 | 0.1 | 0.1 | 0.1 | 0.1 | 0.1 | 0.1 |
| Rhamnosus dead bacteria concentration | ×10⁸/L | 20 | 20 | 20 | 20 | 20 | 20 | 20 |
| Absorbance at wavelength of 660 nm | - | ≤ 0.02 | ≤ 0.02 | ≤ 0.02 | ≤ 0.02 | ≤ 0.02 | 0.1 | ≥ 1.5 |
| Yogurt character | - | 1.3 | 2.6 | 3.4 | 3.9 | 4.2 | 4.1 | 4 |
| Odor originating from beneficial bacteria | - | 1 | 1 | 1 | 1 | 1 | 1 | 1 |

**[Table 3-2]**

| | Units | Test group 11 | Test group 51 | Test group 52 | Test group 27 | Test group 53 | Test group 54 | Test group 55 |
|---|---|---|---|---|---|---|---|---|
| Protein concentration | Mass% | 0 | 0.001 | 0.01 | 0.05 | 0.1 | 0.5 | 10 |
| Limonene concentration | ppm | 50 | 50 | 50 | 50 | 50 | 50 | 50 |
| Rhamnosus dead bacteria concentration | ×10⁸/L | 20 | 20 | 20 | 20 | 20 | 20 | 20 |
| Absorbance at wavelength of 660 nm | - | ≤ 0.02 | ≤ 0.02 | ≤ 0.02 | ≤ 0.02 | ≤ 0.02 | 0.1 | ≥ 1.5 |
| Yogurt character | - | 1.3 | 2.4 | 3.3 | 3.9 | 4.3 | 4.7 | 4.3 |
| Odor originating from beneficial bacteria | - | 1 | 1 | 1 | 1 | 1 | 1 | 1 |

It can be seen from Table 1-1 and Table 1-2 that in test groups 12 to 31 that are beverages containing dead bacteria of beneficial bacteria, a protein, and at least one among a linear ketone and a monoterpene (specifically, 2-nonanone and limonene) and in which a concentration of dead beneficial bacteria is 5 × 10⁸/L or more, yogurt character is enhanced compared to test groups 1 to 11 where beverages that did not satisfy the above were prepared.

It can be seen from Table 2-1 and Table 2-2 that in test groups 16, 27, and 32 to 45 where the absorbance of a beverage is 1.00 or less and dead beneficial bacteria are contained in a concentration of 5 × 10⁸/L or more, yogurt character is enhanced compared to test groups 6 and 7 where beverages that did not satisfy the above were prepared. It can also be seen that the influence of an odor originating from beneficial bacteria increases as beneficial bacteria are added in a higher concentration.

It can be seen from Table 3-1 and Table 3-2 that in test groups 16, 27, 46 to 49, and 51 to 54 where the protein concentration is not less than 0.001 mass% and not more than 0.5 mass%, yogurt character is enhanced compared to test groups 10 and 11 where beverages that did not satisfy the above were prepared, and it was possible to obtain a beverage with excellent yogurt character having an absorbance of 1.00 or less and having low turbidity. It can also be seen that although yogurt character is enhanced in test groups 50 and 55 where the protein concentration is 10 mass%, the absorbance exceeds 1.00, and a beverage having low turbidity could not be obtained.

### INDUSTRIAL APPLICABILITY

According to the present disclosure, it is possible to provide a beverage having low turbidity and natural yogurt character.

## Claims

1. A beverage comprising:
dead bacteria of beneficial bacteria;
a protein; and
at least one among a linear ketone and a monoterpene, wherein
a dead bacteria concentration of the beneficial bacteria is 5 × 10⁸/L or more, and
the beverage has an absorbance of 1.00 or less at a wavelength of 660 nm.

2. The beverage according to claim 1, wherein the dead bacteria concentration of the beneficial bacteria is 4,000 × 10⁸/L or less.

3. The beverage according to claim 1, wherein the beneficial bacteria are one type or two or more types selected from the group consisting of Lactobacillus bacteria and Lactococcus bacteria.

4. The beverage according to claim 1, wherein the beneficial bacteria are one type or two or more types selected from the group consisting of Lactobacillus rhamnosus CRL1505, Lactococcus lactis subsp. lactis JCM5805, and Lactobacillus paracasei KW3110.

5. The beverage according to claim 1, wherein the beverage comprises both the linear ketone and the monoterpene.

6. The beverage according to claim 1, wherein a concentration of the protein in the beverage is not less than 0.001 mass% and not more than 9.0 mass%.

7. The beverage according to claim 1, wherein a concentration of the linear ketone in the beverage is not less than 0.001 ppm and not more than 50 ppm, and a concentration of the monoterpene in the beverage is not less than 0.05 ppm and not more than 1,000 ppm.

8. The beverage according to any one of claims 1 to 7, wherein **the beverage** is a packaged beverage.

9. A method of producing a beverage that contains dead bacteria of beneficial bacteria, a protein, and at least one among a linear ketone and a monoterpene, the method comprising a step of, in blending of the protein, at least one among the linear ketone and the monoterpene, and the dead bacteria of the beneficial bacteria, blending the dead bacteria of the beneficial bacteria, the protein, and at least one among the linear ketone and the monoterpene such that a dead bacteria concentration of the beneficial bacteria is 5 × 10⁸/L or more and the beverage has an absorbance of 1.00 or less at a wavelength of 660 nm.

10. A method of improving yogurt flavor of a beverage that contains dead bacteria of beneficial bacteria and a protein, and that also contains at least one among a linear ketone and a monoterpene, the method comprising a step of, in blending of the protein, at least one among the linear ketone and the monoterpene, and the dead bacteria of the beneficial bacteria, blending the dead bacteria of the beneficial bacteria, the protein, and at least one among the linear ketone and the monoterpene such that a dead bacteria concentration of the beneficial bacteria is 5 × 10⁸/L or more and the beverage has an absorbance of 1.00 or less at a wavelength of 660 nm.
